(19) Europäisches Patentamt
European Patent Office
Office européen des brevets

(11) EP 4 678 700 A1

(12) **EUROPEAN PATENT APPLICATION**
published in accordance with Art. 153(4) EPC

(43) Date of publication:
**14.01.2026 Bulletin 2026/03**

(21) Application number: **24767005.2**

(22) Date of filing: **29.02.2024**

(51) International Patent Classification (IPC):
***C08L 101/00** (2006.01)* ***C08K 3/01** (2018.01)*
***C08K 3/10** (2018.01)* ***C08K 3/18** (2006.01)*
***C08K 5/52** (2006.01)* ***C08K 7/00** (2006.01)*

(52) Cooperative Patent Classification (CPC):
**C08K 3/01; C08K 3/10; C08K 3/18; C08K 5/52; C08K 7/00; C08L 101/00**

(86) International application number:
**PCT/JP2024/007497**

(87) International publication number:
**WO 2024/185635 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.03.2023 JP 2023035389**

(71) Applicant: **TOYOBO MC Corporation**
**Osaka-shi, Osaka 530-0001 (JP)**

(72) Inventors:
- **HORI, Yusaku**
  **Otsu-shi, Shiga 520-0292 (JP)**
- **MAEDA, Maki**
  **Otsu-shi, Shiga 520-0292 (JP)**
- **KAMIYA, Motonobu**
  **Otsu-shi, Shiga 520-0292 (JP)**
- **SHIMIZU, Takahiro**
  **Otsu-shi, Shiga 520-0292 (JP)**

(74) Representative: **Vossius & Partner Patentanwälte Rechtsanwälte mbB**
**Siebertstrasse 3**
**81675 München (DE)**

# (54) ELECTROMAGNETIC-WAVE-SHIELDING COMPOSITION INCLUDING THERMOPLASTIC RESIN OR THERMOPLASTIC ELASTOMER AND MOLDED ARTICLE COMPRISING SAME

(57) An object of the present invention is to provide an electromagnetic wave-shielding composition that exhibits electromagnetic wave-shielding performance and a suppressed increase in fluidity upon heating. The above object can be achieved by an electromagnetic wave-shielding composition containing at least one of a thermoplastic resin or a thermoplastic elastomer as a component (A), a soft-magnetic metal powder as a component (B), at a mass ratio (component (A)/component (B)) in a range of from 5/95 to 95/5, and at least one of a phosphite-based compound or a phosphate-based compound as a component (C), in an amount of from 0.02 to 1.4 parts by mass relative to 100 parts by mass of the total components (A) and (B), wherein the composition molded into a 2.0 mm thick sheet exhibits magnetic field shielding performance of 3 dB or more at frequencies of both 1 MHz and 10 MHz measured by the KEC method.



Processed by Luminess, 75001 PARIS (FR)

## Description

### TECHNICAL FIELD

The present invention relates to an electromagnetic wave-shielding composition that has a suppressed increase in fluidity upon heating.

### BACKGROUND ART

Unwanted electromagnetic waves generated by various electronic devices may affect other electronic devices and cause malfunctions. To suppress the adverse effects of unwanted electromagnetic waves, metal casings and plates have been generally used as countermeasures for shielding unwanted electromagnetic waves.

However, the use of casings and plates formed from metals is inconvenient because they cause an increase in weight and a decrease in the degree of freedom of shape. Accordingly, in order to suppress the adverse effects of unwanted electromagnetic waves, electromagnetic wave-shielding molded articles such as sheets, hoses, and cases obtained by processing resin compositions containing a magnetic powder, mixed and dispersed in rubber or synthetic resin, have been widely used.

As such electromagnetic wave shielding materials, materials obtained by adding soft magnetic metal powders, such as silicon steel, ferrite, permalloy, sendust, and permendur, have been proposed.

In Patent Document 1, an example of a resin composition containing a soft magnetic powder, which exhibits high electromagnetic wave-shielding performance in the low-frequency range and processability in heat-melt molding is disclosed. It is also disclosed that a sheet obtained by extrusion molding of a thermoplastic resin EVA (ethylene-vinyl acetate copolymer resin) containing a soft magnetic powder can provide shielding performance against magnetic field components at 0.3 MHz and 1 MHz.

In Patent Document 2, an example of a resin composition for producing an injection molded article having shielding performance against magnetic fields in the low-frequency is disclosed. It is also disclosed that shielding performance against magnetic field components at frequencies in the range of from 0.1 MHz to 100 MHz can be provided by adding a sendust alloy (Fe-Si-Al alloy) powder having a predetermined median diameter and a specific aspect ratio to a polyamide resin as a thermoplastic resin.

### CITATION LIST

### PATENT DOCUMENTS

Patent Document 1: WO 2021/246442
Patent Document 2: JP-A-2012-151205

### SUMMARY OF THE INVENTION

### PROBLEMS TO BE SOLVED BY THE INVENTION

However, it has been found that compositions containing a thermoplastic resin or a thermoplastic elastomer together with a soft-magnetic metal powder, such as those disclosed in Patent Documents 1 and 2, exhibit an increase in fluidity upon heating. This increase in fluidity may cause overfilling in molding, which may adversely affect the mass productivity of the obtained molded article. In particular, this effect is significant in injection molding.

It is an object of the present invention to provide an electromagnetic wave-shielding composition including a thermoplastic resin or a thermoplastic elastomer, and specifically, to provide an electromagnetic wave-shielding composition that exhibits electromagnetic wave-shielding performance and a suppressed increase in fluidity upon heating.

### SOLUTION TO THE PROBLEMS

The present inventors conducted extensive studies to address the above problems. As a result, the present inventors have found that an increase in fluidity upon heating can be suppressed with electromagnetic wave-shielding performance being retained, by adding at least one selected from the group consisting of a phosphite-based compound and a phosphate-based compound in a predetermined amount, when a thermoplastic resin or a thermoplastic elastomer is mixed with a soft-magnetic metal powder. Based on this finding, the present invention has been completed. More

specifically, the present invention provides the following.

[1] An electromagnetic wave-shielding composition comprising:

a component (A), which is at least one selected from the group consisting of a thermoplastic resin and a thermoplastic elastomer;
a component (B), which is a soft-magnetic metal powder, at a mass ratio (component (A)/component (B)) in a range of from 5/95 to 95/5; and
a component (C), which is at least one selected from the group consisting of a phosphite-based compound and a phosphate-based compound, in an amount of from 0.02 parts by mass to 1.4 parts by mass relative to 100 parts by mass in total of the component (A) and the component (B),
wherein the electromagnetic wave-shielding composition molded into a sheet with a thickness of 2.0 mm exhibits magnetic field shielding performance of 3 dB or more at frequencies of both 1 MHz and 10 MHz when measured by the KEC method.

[2] The electromagnetic wave-shielding composition according to [1],

wherein the electromagnetic wave-shielding composition has a $\Delta$MFR of 20 g/10min or less, when measured in accordance with ISO 1133 and determined by the following equation:

$$\Delta\text{MFR} = (\text{MFR in retention for 25 minutes}) - (\text{MFR in retention for 5 minutes})$$

wherein the MFR in retention for 25 minutes refers to a melt flow rate measured with a preheating time of 25 minutes, the MFR in retention for 5 minutes refers to a melt flow rate measured with a preheating time of 5 minutes, and the measurement is conducted under a load of 2160 g at a measurement temperature of a melting point of the component (A) + 25°C.

[3] The electromagnetic wave-shielding composition according to [1] or [2],
wherein the component (A) comprises at least one selected from the group consisting of a polyester-based resin, a polyester elastomer, a polycarbonate-based resin, a polyamide-based resin, a polyphenylene sulfide-based resin, and a polyolefin-based resin.
[4] The electromagnetic wave-shielding composition according to any one of [1] to [3],
wherein the component (B) comprises at least one powder selected from the group consisting of an Fe-Si alloy, an Fe-Si-Al alloy, an Fe-Si-Cr alloy, and ferrite.
[5] The electromagnetic wave-shielding composition according to any one of [1] to [4],
wherein the component (B) has a flat shape.
[6] The electromagnetic wave-shielding composition according to any one of [1] to [5],
wherein the component (B) has an average particle diameter D50 of from 1 μm to 100 μm.
[7] The electromagnetic wave-shielding composition according to any one of [1] to [6],
wherein the component (C) comprises at least one selected from the group consisting of a compound represented by the following Formula (C1-1), a compound represented by the following Formula (C1-2), and a compound represented by the following Formula (C2-1):

[Chemical Formula 1]

$$P\left(O-R^1\right)_3 \quad (C1\text{-}1)$$

wherein $R^1$ represents an aliphatic hydrocarbon group having 1 to 30 carbon atoms or an aromatic hydrocarbon group having 6 to 30 carbon atoms;

[Chemical Formula 2]

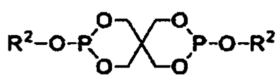

(C1-2)

wherein $R^2$ represents an aliphatic hydrocarbon group having 1 to 30 carbon atoms or an aromatic hydrocarbon group

having 6 to 30 carbon atoms; and

[Chemical Formula 3]

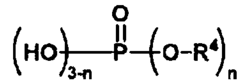 (C2-1)

wherein $R^4$ represents an aliphatic hydrocarbon group having 1 to 30 carbon atoms and n represents 1 or 2.

[8] The electromagnetic wave-shielding composition according to any one of [1] to [7], wherein a content of the component (C) is from 0.05 parts by mass to 2.7 parts by mass relative to 100 parts by mass of the component (B).

[9] A molded article formed from the electromagnetic wave-shielding composition according to any one of [1] to [8].

[10] Use of the electromagnetic wave-shielding composition according to any one of [1] to [8] for shielding electromagnetic waves with frequencies ranging from 1 kHz to 1 GHz.

## EFFECTS OF THE INVENTION

According to the present invention, a composition that exhibits high electromagnetic wave-shielding performance and has a suppressed increase in fluidity upon heating can be provided by mixing a component (A), which is at least one selected from the group consisting of a thermoplastic resin and a thermoplastic elastomer, a component (B), which is a soft-magnetic metal powder, and a specific amount of a component (C), which is at least one selected from the group consisting of a phosphite-based compound and a phosphate-based compound.

## DESCRIPTION OF EMBODIMENTS

Hereinafter, the embodiments of the present invention will be described in detail. It should be noted that the scope of the present invention is not limited to the following embodiments, and modifications may be made as appropriate within the scope of the invention's objectives. Redundant descriptions may be omitted as appropriate, and the omissions do not limit the gist of the invention.

### [Component (A)]

A component (A) used as a base component (matrix component) in the electromagnetic wave-shielding composition of the present invention is at least one selected from the group consisting of a thermoplastic resin and a thermoplastic elastomer.

The thermoplastic resin is not particularly limited, and typical examples thereof include polyester-based resins, polycarbonate-based resins, polyamide-based resins, polyphenylene sulfide-based resins, and polyolefin-based resins. These thermoplastic resins may be used alone or in combination with two or more types.

The thermoplastic elastomer is not particularly limited, and typical examples thereof include polyester elastomers.

The component (A) may be used alone or in combination with two or more types.

Among the examples given as the component (A), resins and/or elastomers having an ester skeleton and/or an amide skeleton in repeating units in their main chain (hereinafter referred to as an ester- and/or amide-based resin and/or elastomer), such as a polyester-based resin, a polyester elastomer, a polycarbonate-based resin, and a polyamide-based resin, are preferred, and resins and/or elastomers having an ester skeleton in repeating units in their main chains (hereinafter referred to as an ester-based resin and/or elastomer) are more preferred. When the component (A) (particularly, the ester- and/or amide-based resin and/or elastomer) is melt-kneaded with a soft-magnetic metal powder as the component (B), the fluidity tends to increase upon heating. However, in the present invention, the incorporation of the component (C), which is at least one selected from the group consisting of a phosphite-based compound and a phosphate-based compound, can suppress an increase in fluidity.

The component (A) preferably comprises the ester- and/or amide-based resin and/or elastomer, more preferably at least one selected from the group consisting of a polyester-based resin (excluding liquid crystal polyester-based resins), a polyamide-based resin, and a polyester elastomer, further preferably at least one of selected from the group consisting of a polyester-based resin (excluding liquid crystal polyester-based resins) and a polyester elastomer, and particularly preferably a polyester-based resin (excluding liquid crystal polyester-based resins). Polyester-based resins (excluding liquid crystal polyester-based resins) and polyester elastomers exhibit low water absorption and are useful for improving the dimensional stability of the obtained molded article.

The polyester-based resin is preferably an aromatic polyester resin having an aromatic dicarboxylic acid unit and a diol unit as constituent units.

The aromatic dicarboxylic acid which serves as the constituent unit is not particularly limited, and specific examples thereof include benzenedicarboxylic acids such as terephthalic acid, isophthalic acid, and orthophthalic acid; naphthalenedicarboxylic acids such as 2,6-naphthalenedicarboxylic acid and 1,5-naphthalenedicarboxylic acid; compounds having two carboxyphenyl groups such as 1,2-bis(phenoxy)ethane-p,p'-dicarboxylic acid and diphenyl-p,p-dicarboxylic acid; and functional derivatives thereof. These aromatic dicarboxylic acids may be used alone or in combination with two or more types.

Among these, terephthalic acid, isophthalic acid, 2,6-naphthalenedicarboxylic acid, and diphenyl-p,p-dicarboxylic acid are preferred as the aromatic dicarboxylic acids which serve as the constituent units, and they exhibit high crystallization rates and excellent moldability. In particular, benzenedicarboxylic acids such as terephthalic acid and isophthalic acid, and naphthalenedicarboxylic acids such as 2,6-naphthalenedicarboxylic acid are preferred.

The aromatic dicarboxylic acid unit is introduced, for example, through ester synthesis using an aromatic dicarboxylic acid, an aromatic dicarboxylic acid ester, or a salt thereof as a raw material. Examples of the aromatic dicarboxylic acid ester as the raw material include monoalkyl esters of aromatic dicarboxylic acids and dialkyl esters of aromatic dicarboxylic acids. Among these, dialkyl esters of aromatic dicarboxylic acids are preferred. Examples of preferred raw materials include terephthalic acid, terephthalic acid dimethyl ester, isophthalic acid, isophthalic acid dimethyl ester, 2,6-naphthalenedicarboxylic acid, and 2,6-naphthalenedicarboxylic acid dimethyl ester.

Furthermore, in the aromatic polyester resin, a part of the aromatic dicarboxylic acid units may be replaced with dicarboxylic acid units excluding aromatic dicarboxylic acid units (hereinafter referred to as other dicarboxylic acid units). Examples of other dicarboxylic acids which serve as other dicarboxylic acid units include saturated or unsaturated aliphatic dicarboxylic acids such as adipic acid, sebacic acid, succinic acid, glutaric acid, 1,10-decanedicarboxylic acid, and dimer acid, and functional derivatives thereof; and alicyclic dicarboxylic acids such as hexahydroterephthalic acid, hexahydroisophthalic acid, and cyclohexanedicarboxylic acid, and functional derivatives thereof. The content of the other dicarboxylic acid unit is preferably less than 50 mol%, more preferably less than 40 mol%, and further preferably less than 30 mol%, based on the total amount of the aromatic dicarboxylic acid unit and the dicarboxylic acid unit excluding aromatic dicarboxylic acid units (whole dicarboxylic acid units). When the content of the other dicarboxylic acid unit is less than 50 mol%, the crystallinity of the polyester-based resin tends to be improved, and moldability and heat resistance also tend to be enhanced.

The diol (unit) that constitutes the aromatic polyester resin is not particularly limited, and specific examples thereof include aliphatic glycols such as alkylene glycols (for example, ethylene glycol, 1,3-propylene glycol, 1,4-butanediol, and 1,6-hexanediol); alicyclic glycols such as 1,4-cyclohexanedimethanol and 1,4-cyclohexanediol; and aromatic diols such as bisphenol A, hydroquinone, and 2,2-bis(4-β-hydroxyethoxyphenyl)propane. These diols (units) may be used alone or in combination with two or more types.

The diol (unit) preferably comprises at least one selected from the group consisting of an aliphatic glycol and an alicyclic glycol, and more preferably an alkylene glycol having 2 to 8 carbon atoms. More specifically, the diol (unit) preferably comprises at least one selected from the group consisting of ethylene glycol, 1,3-propylene glycol, 1,4-butanediol, 1,6-hexanediol, and 1,4-cyclohexanedimethanol, and more preferably comprises at least one selected from the group consisting of ethylene glycol and 1,4-butanediol.

Specific examples of the aromatic polyester resin include polyethylene terephthalate, polypropylene terephthalate, polybutylene terephthalate, polycyclohexanedimethylene terephthalate, polyhexylene terephthalate, polyethylene naphthalate, polypropylene naphthalate, polybutylene naphthalate, polyethylene isophthalate/terephthalate copolymer, polypropylene isophthalate/terephthalate copolymer, polybutylene isophthalate/terephthalate copolymer, polyethylene terephthalate/naphthalate copolymer, polypropylene terephthalate/naphthalate copolymer, polybutylene terephthalate/-naphthalate copolymer, polybutylene terephthalate/decanedicarboxylate copolymer, polyethylene terephthalate/cyclohexanedimethylene terephthalate copolymer, polyethylene terephthalate/succinate copolymer, polypropylene terephthalate/succinate copolymer, polybutylene terephthalate/succinate copolymer, polyethylene terephthalate/adipate copolymer, polypropylene terephthalate/adipate copolymer, polybutylene terephthalate/adipate copolymer, polyethylene terephthalate/sebacate copolymer, polypropylene terephthalate/sebacate copolymer, polybutylene terephthalate/sebacate copolymer, polyethylene terephthalate/isophthalate/adipate copolymer, polypropylene terephthalate/isophthalate/adipate copolymer, polybutylene terephthalate/isophthalate/succinate copolymer, polybutylene terephthalate/isophthalate/adipate copolymer, polybutylene terephthalate/isophthalate/sebacate copolymer, bisphenol A/terephthalic acid polymer, bisphenol A/isophthalic acid polymer, and bisphenol A/terephthalic acid/isophthalic acid copolymer.

Additionally, as the polyester-based resin, a liquid crystal polyester-based resin may also be exemplified. Examples of the liquid crystal polyester-based resin include a p-hydroxybenzoic acid/ethylene glycol/terephthalic acid copolymer, a hydroxynaphthoic acid/p-hydroxybenzoic acid copolymer, and a biphenol/benzoic acid/p-hydroxybenzoic acid copolymer.

In particular, the polyester-based resin is preferably an aromatic polyester resin other than liquid crystal

polyester-based resins. Among aromatic polyester resins other than liquid crystal polyester-based resins, a polymer having an aromatic dicarboxylic acid and an alkylene glycol as constituent units is preferred, a polymer having an aromatic dicarboxylic acid and an alkylene glycol having 2 to 8 carbon atoms as constituent units is more preferred, and a polymer having terephthalic acid and an alkylene glycol having 2 to 8 carbon atoms as constituent units is further preferred. From the viewpoint of heat resistance and moldability, at least one selected from the group consisting of a polyethylene terephthalate (PET) and a polybutylene terephthalate (PBT) is preferred, and a polybutylene terephthalate (PBT) is particularly preferred.

The polyester-based resin has an intrinsic viscosity of preferably from 0.5 dl/g to 1.8 dl/g, and more preferably from 0.6 dl/g to 1.5 dl/g. The intrinsic viscosity of the polyester-based resin adjusted to the predetermined value or more can enhance durability, while the intrinsic viscosity of the polyester-based resin adjusted to the predetermined value or less can enhance processability such as in injection molding.

The polyester elastomer is preferably a polyester elastomer in which a hard segment composed of a polyester having an aromatic dicarboxylic acid and an aliphatic glycol and/or an alicyclic glycol as constituent units is bonded to a soft segment comprising at least one selected from the group consisting of an aliphatic polyether, an aliphatic polyester, and an aliphatic polycarbonate.

Examples of the aromatic dicarboxylic acids that constitute the polyester of the hard segment include the aromatic dicarboxylic acids as exemplified for the aromatic polyester resin above, and the preferred embodiments thereof are also the same. Also, similarly to the above-described aromatic polyester resins, the polyester of the hard segment may also include a dicarboxylic acid other than aromatic dicarboxylic acids as a constituent unit, and the preferred embodiments thereof are also the same.

Examples of the aliphatic glycol and the alicyclic glycol that constitute the polyester of the hard segment include the aliphatic glycols and the alicyclic glycols as exemplified for the aromatic polyester resin above, and the preferred embodiments thereof are also the same.

The hard segment is preferably a polyester having an aromatic dicarboxylic acid and an alkylene glycol having 2 to 8 carbon atoms as constituent units, and more preferably a polyester having terephthalic acid and an alkylene glycol having 2 to 8 carbon atoms as constituent units. From the viewpoint of heat resistance and moldability, at least one selected from the group consisting of a polyethylene terephthalate (PET) and a polybutylene terephthalate (PBT) is preferred, and a polybutylene terephthalate (PBT) is particularly preferred.

In the case where an aromatic polyester suitable for the polyester that constitutes the hard segment is produced in advance and subsequently copolymerized with the component of the soft segment, the aromatic polyester can be easily produced by a typical method for producing polyester. The polyester desirably has a number average molecular weight of from 10000 to 40000.

Examples of the aliphatic polyether that constitutes the soft segment of the polyester elastomer include polyethers having 1 or 2 or more alkanediols with 2 to 10 carbon atoms as constituent units such as polyoxyethylene glycol, polyoxypropylene glycol, polyoxytetramethylene glycol, polyoxyhexamethylene glycol, polyoxytrimethylene glycol, a copolymer of ethylene oxide and propylene oxide, an ethylene oxide adduct of polyoxyethylene glycol, and a copolymer of ethylene oxide and tetrahydrofuran. The aliphatic polyether has a number average molecular weight of, for example, from 300 to 5000, preferably from 500 to 4000, and more preferably from 700 to 2500.

Examples of the aliphatic polyester that constitutes the soft segment include aliphatic polyesters having repeating ester groups and alkylene groups with 2 to 12 carbon atoms, such as poly($\varepsilon$-caprolactone), polyenantholactone, polycaprolactone, and polybutylene adipate. The aliphatic polyester has a number average molecular weight of, for example, from 300 to 5000, preferably from 500 to 4000, and more preferably from 700 to 2000.

The aliphatic polycarbonate that constitutes the soft segment may be a resin comprising a carbonic acid unit and an aliphatic diol unit, and the aliphatic diol is preferably one having 2 to 12 carbon atoms. Examples of such aliphatic diol include ethylene glycol, 1,3-propylene glycol, 1,4-butanediol, 1,5-pentanediol, 1,6-hexanediol, 1,8-octanediol, 2,2-dimethyl-1,3-propanediol, 3-methyl-1,5-pentanediol, 2,4-diethyl-1,5-pentanediol, 1,9-nonanediol, and 2-methyl-1,8-octanediol. In particular, from the viewpoint of flexibility and low-temperature characteristics of the obtained polyester elastomer, an aliphatic diol having 5 to 12 carbon atoms is preferred. These components may be used alone or, if needed, in combination with two or more types. The aliphatic polycarbonate has a number average molecular weight of, for example, from 300 to 15000, and preferably from 500 to 13000.

In the polyester elastomer, the composition ratio of the hard segment to the soft segment (hard segment/soft segment) is preferably from 40/60 to 95/5, more preferably from 50/50 to 95/5, and further preferably from 55/45 to 90/10, on a mass basis.

The polyester elastomer has a reduced viscosity of preferably 0.5 dl/g or more and 3.5 dl/g or less, more preferably 1.0 dl/g or more and 3.0 dl/g or less, and further preferably 1.1 dl/g or more and 2.8 dl/g or less. Adjusting the reduced viscosity of the polyester elastomer to the predetermined value or more enhances durability, while adjusting the reduced viscosity of the polyester elastomer to the predetermined value or less enhances processability as in injection molding.

The polyester elastomer has an acid value of preferably from 5 eq/ton to 200 eq/ton, and more preferably from 10 eq/ton to 80 eq/ton.

The polyester elastomer preferably has a Shore D hardness of from 25 to 75, and more preferably from 25 to 65.

The polycarbonate-based resin is not particularly limited as long as it is a resin comprising a carbonic acid unit and a diol unit, and examples of the polycarbonate-based resin include an aromatic polycarbonate resin having a carbonic acid unit and an aromatic diol unit as constituent units, an aliphatic polycarbonate resin having a carbonic acid unit and an aliphatic diol unit as constituent units, and an aromatic-aliphatic polycarbonate resin having a carbonic acid unit, an aromatic diol unit, and an aliphatic diol unit as constituent units.

Examples of the aromatic diol that constitutes the polycarbonate-based resin include the same compounds as those described as aromatic diols serving as the constituent units of the polyester-based resin.

Examples of the aliphatic diol that constitutes the polycarbonate-based resin include the same compounds as those described as aliphatic diols serving as the constituent units of the aliphatic polycarbonate that constitutes the soft segment of the polyester elastomer.

The polyamide-based resin is a resin obtained by using any one of (i) an amino acid, (ii) a lactam, or (iii) a diamine and a dicarboxylic acid, as a primary raw material. The polyamide-based resin can be obtained by polycondensation of an amino acid, by ring-opening polymerization of a lactam, or by polycondensation of a diamine and a dicarboxylic acid. The amount of the amino acid, the lactam, and the diamine and the dicarboxylic acid in the raw materials constituting the polyamide resin is preferably 50 mol% or more, more preferably 70 mol% or more, and further preferably 85 mol% or more.

Examples of the amino acid include amino aliphatic carboxylic acids having about 4 to 15 carbon atoms such as 6-aminocaproic acid, 11-aminoundecanoic acid, and 12-aminododecanoic acid; and amino aromatic carboxylic acids such as p-aminomethylbenzoic acid.

Examples of the lactam include aliphatic lactams having about 5 to 15 carbon atoms such as ε-caprolactam and ω-laurolactam.

Examples of the diamine include tetramethylenediamine, hexamethylenediamine, nonamethylenediamine, decamethylenediamine, undecamethylenediamine, dodecamethylenediamine, 2,2,4-/2,4,4-trimethylhexamethylenediamine, 5-methylnonamethylenediamine, 2,4-dimethyloctamethylenediamine, m-xylylenediamine, p-xylylenediamine, 1,3-bis(aminomethyl)cyclohexane, 1-amino-3-aminomethyl-3,5,5-trimethylcyclohexane, 3,8-bis(aminomethyl)tricyclodecane, bis(4-aminocyclohexyl)methane, bis(3-methyl-4-aminocyclohexyl)methane, 2,2-bis(4-aminocyclohexyl)propane, and bis(aminopropyl)piperazine.

Examples of the dicarboxylic acid include adipic acid, suberic acid, azelaic acid, sebacic acid, dodecanedioic acid, terephthalic acid, isophthalic acid, naphthalenedicarboxylic acid, 2-chloroterephthalic acid, 2-methylterephthalic acid, 5-methylisophthalic acid, sodium 5-sulfoisophthalate, hexahydroterephthalic acid, hexahydroisophthalic acid, and diglycolic acid.

Specific examples of the polyamide-based resin include polyamide 6, polyamide 66, polyamide 46, polyamide 11, polyamide 12, polyamide 610, polyamide 69, polyamide 6T, polyamide 9T, polyamide MXD6, polyamide 6/66 copolymer, polyamide 6/610 copolymer, polyamide 6/6T copolymer, polyamide 6/66/610 copolymer, polyamide 6/12 copolymer, polyamide 6T/12 copolymer, polyamide 6T/66 copolymer, polyamide 6/6I copolymer, polyamide 66/6I/6 copolymer, polyamide 6T/6I copolymer, polyamide 6T/6I/66 copolymer, polyamide 6/66/610/12 copolymer, and polyamide 6T/M-5T copolymer. Among these, from the viewpoint of a good balance of chemical resistance and impact-resistance of the obtained molded article, and fluidity, at least one selected from the group consisting of polyamide 6, polyamide 66, polyamide 12, and a copolymer containing at least one of them as a main component is preferred, and at least one selected from the group consisting of polyamide 6 and a copolymer containing polyamide 6 as a main component is more preferred. In this specification, a "copolymer containing A as a main component" refers to a copolymer having a structure derived from A in an amount of preferably 50 mol% or more, more preferably 70 mol% or more, and further preferably 85 mol% or more.

The relative viscosity of the polyamide-based resin, when dissolved in a 98% sulfuric acid solution (a polyamide-based resin concentration: 1 g/dl, 20°C), is preferably from 1.5 to 3.5, more preferably from 2.0 to 3.0, and further preferably from 2.2 to 2.8.

The polyphenylene sulfide-based resin is not particularly limited, and any commonly used polyphenylene sulfide-based resin may be used. Specific examples thereof include poly(p-phenylene sulfide), polyphenylene sulfide sulfone, polyphenylene sulfide ketone, and polyphenylene sulfide ether.

Specific examples of the polyolefin-based resin include homopolymers or copolymers containing a repeating unit derived from α-olefins, such as ethylene and propylene, as a main component, and examples thereof include a homopolymer of propylene, a homopolymer of ethylene, and block and random copolymers in which ethylene and another α-olefin (e.g., propylene and buten-1) are copolymerized. These may be used alone or in combination with two or more types as long as they can contribute to characteristics of the resin material. Either linear or branched polyolefin-based resin may be used in the present invention. The polyolefin-based resin preferably comprises at least one selected from the group consisting of a polyethylene-based resin containing a constituent unit derived from ethylene as a main component and a

polypropylene-based resin containing a constituent unit derived from propylene as a main component. As the polypropylene-based resin, any one of polypropylene-based resins such as isotactic, atactic, or syndiotactic polypropylene may be used. Examples of the polyethylene-based resin include a linear low-density polyethylene (LLDPE), a low-density polyethylene (LDPE), a high-density polyethylene (HDPE), an ultralow-density polyethylene (ULDPE), and an ultrahigh-molecular weight polyethylene (UHMW-PE).

The component (A) has a melting point of preferably 100°C or higher, more preferably 150°C or higher, and preferably 300°C or lower, more preferably 260°C or lower. The melting point of the component (A) is preferably from 100°C to 300°C, more preferably from 150°C to 260°C. The melting point of the component (A) can be determined by the measurement method described in Examples below.

The moisture content of the component (A) is, for example, 200 ppm or less, preferably 170 ppm or less, and more preferably 150 ppm or less. The moisture content of the component (A) can be adjusted to the above range by heat drying the component (A).

When the component (A) comprises 2 or more of the thermoplastic resins and/or the thermoplastic elastomers, multiple melting points may be observed. In such a case, the melting point of the component (A) can be determined as follows.

Specifically, if the component (A) comprises 2 or more of the thermoplastic resins and/or the thermoplastic elastomers, and multiple melting points are observed with the difference between the maximum value and the minimum value of the multiple melting points within 30°C, the melting point of the component (A) can be determined by calculating the weighted average value. For example, if the component (A) comprises 50% by mass of a thermoplastic resin or a thermoplastic elastomer (a) having a melting point of 100°C, 40% by mass of a thermoplastic resin or a thermoplastic elastomer (b) having a melting point of 110°C, and 10% by mass of a thermoplastic resin or a thermoplastic elastomer (c) having a melting point of 130°C, the melting point of the component (A) is calculated as follows: 100°C * 50% + 110°C * 40% + 130°C * 10% = 107°C

On the other hand, if the component (A) comprises 2 or more of the thermoplastic resins and/or the thermoplastic elastomers, and multiple melting points are observed with the difference between the maximum value and the minimum value of the multiple melting points greater than 30°C, the highest melting point is taken as the melting point of the component (A).

[Component (B)]

The electromagnetic wave-shielding composition of the preset invention comprises a soft-magnetic metal powder as the component (B). The inclusion of the soft-magnetic metal powder can impart electromagnetic wave-shielding performance to the obtained molded article. As the component (B), powders of conventionally known soft-magnetic metals such as iron metals, alloys of iron and other elements (which may hereinafter be referred to as "iron alloys"), and iron-containing compounds (preferably ionic iron-containing compounds), may be used.

As the iron metals, so-called iron powder may be used. The iron metal is preferably pure iron.

As the iron-based alloy, alloys of iron and other metal elements or alloys of iron and non-metal elements may be used depending on the intended use. Specific examples of the iron alloys include Fe-C alloys, Fe-Cr alloys, Fe-Cr-Mo alloys, Fe-Cr-Al alloys, Fe-Si-Cr alloys, Fe-Mn alloys, Fe-Mn-Mo alloys, Fe-Ni alloys, Fe-Ni-Cr alloys, Fe-Ni-Co alloys, Fe-Co alloys, Fe-Si alloys, and Fe-Si-Al alloys, which are represented based on iron and primary constituent elements. The term "Fe-Cr-Mo-based alloy" means that the alloy contains the components in the order of Fe>Cr>Mo with respect to content. The same applies to other alloys listed above. The iron concentration in the Fe-based alloy is, for example, 50% by mass or more, preferably 70% by mass or more, and more preferably 80% by mass or more.

As the iron-containing compound, compounds containing divalent or trivalent iron (ionic iron), such as iron oxides, iron hydroxides, iron chlorides, iron sulfides, and iron sulfates, may be used.

In order to further enhance the electromagnetic wave-shielding performance, the component (B) preferably comprises at least one powder selected from the group consisting of an Fe-Si alloy, an Fe-Si-Al alloys, an Fe-Si-Cr alloy, and ferrite, more preferably at least one powder selected from the group consisting of an Fe-Si-Al alloy, an Fe-Si-Cr alloy, and ferrite, and further preferably a powder of a Fe-Si-Al alloy and/or a Fe-Si-Cr alloy.

The above Fe-Si alloy is an Fe-based alloy containing Si. In the composition of the Fe-Si alloy, the content of Si is preferably from 3% by mass to 7% by mass, with the remainder being substantially Fe.

The above Fe-Si-Al alloy is an Fe-based alloy containing Si and Al. The Fe-Si-Al alloy preferably contains Si and Al, with the remainder being substantially Fe. The content of Si in the Fe-Si-Al alloy is preferably from 3% by mass to 12% by mass. The content of Al in the Fe-Si-Al alloy is preferably from 4% by mass to 12% by mass. In the composition of the Fe-Si-Al alloy, particularly preferably, the content of Si is from 3% by mass to 12% by mass, the content of Al is from 4% by mass to 12% by mass, with the remainder being substantially Fe. Representative examples of the composition of the Fe-Si-Al alloy include $Fe_{85}Si_{10}Al_5$ and $Fe_{84.5}Si_{9.5}Al_{5.5}$.

The above Fe-Si-Cr alloy is an Fe-based alloy containing Si and Cr. The Fe-Si-Cr alloy preferably contains Si and

Cr, with the remainder being substantially Fe. The content of Si in the Fe-Si-Cr alloy is preferably from 10% by mass to 25% by mass, and more preferably more than 10% by mass and 25% by mass or less. The content of Cr in the Fe-Si-Cr alloy is preferably 5% by mass or less, and more preferably from 0.5% by mass to 5% by mass. In the composition of the Fe-Si-Cr alloy, particularly preferably, the content of Si is from 10% by mass to 25% by mass (preferably, more than 10% by mass and 25% by mass or less) and the content of Cr is 5% by mass or less (preferably, from 0.5% by mass to 5% by mass), with the remainder being substantially Fe.

As the ferrite, conventionally known soft ferrites exhibiting soft magnetic properties can be used. Among these, Mn-Zn ferrite, Ni-Zn ferrite, Mg-Zn ferrite, and Cu-Zn ferrite are preferred, and Mn-Zn ferrite is more preferred.

The component (B) may be used alone or in combination with two or more types.

The component (B) has an average particle diameter D50 of, for example, 1 μm or more, and preferably 10 μm or more. Adjusting the D50 to the above range can further enhance the electromagnetic wave-shielding performance. The average particle diameter D50 of the component (B) is, for example, 100 μm or less, and preferably 70 μm or less. Adjusting the D50 to the above range can further enhance the fluidity of the electromagnetic wave-shielding composition, and the appearance of the obtained injection-molded article can also be enhanced. Accordingly, the average particle diameter D50 of the component (B) is, for example, from 1μm to 100 μm, and preferably from 10 μm to 70 μm. In the present invention, the average particle diameter D50 refers to a particle diameter at which the cumulative volume-based particle size distribution reaches 50%.

The shape of the component (B) is not particularly limited, and any of spherical, flat, or irregular shapes may be employed. From the viewpoint of further enhancing the electromagnetic wave-shielding performance at low frequencies, a flat shape is preferred.

The mass ratio of the component (A) to the component (B) (component (A)/component (B)) contained in the electromagnetic wave-shielding composition of the present invention is from 5/95 to 95/5, preferably from 20/80 to 90/10, and more preferably from 25/75 to 90/10. The electromagnetic wave-shielding performance can be further improved with an increase in the content of the component (B). However, when the content of the component (B) is excessively high, sufficient incorporation of the component (A) becomes difficult, thereby reducing the fluidity and the mechanical properties. Adjusting the mass ratio of the component (A) relative to the component (B) to the above range enhances the electromagnetic wave-shielding performance while avoiding the above problems.

For the electromagnetic wave-shielding composition of the present invention, the amounts (ratios) of raw material components added directly correspond to their contents (content ratios) in the electromagnetic wave-shielding composition and in the molded article.

[Component (C)]

The electromagnetic wave-shielding composition of the present invention includes the component (A), the component (B), and the component (C), which is at least one selected from the group consisting of a phosphite-based compound and a phosphate-based compound. The inclusion of the component (C) enables suppressed increase in fluidity upon heating while maintaining the electromagnetic wave-shielding performance. The component (C) is not particularly limited as long as a phosphite-based compound and/or a phosphate-based compound is used.

The phosphite-based compound (also referred to as a phosphite ester compound) is a compound containing one or more phosphorus atoms with 3 bonds, where s number of -OH groups, t number of -OR$^a$ groups, and u number of -O-R$^b$- groups are bonded to each phosphorus atom (in the -O-R$^b$- group, -O- is bonded to a phosphorus atom, and R$^b$ is bonded to another phosphorus atom via another -O-), provided that s+t+u = 3, t is 1 or more, u is zero when the number of phosphorus atoms in 1 molecule of the phosphite-based compound is 1, and u is 1 or 2 when the number of phosphorus atoms is 2 or more. When the number of phosphorus atoms is 2 or more, s, t, and u may be different from each other depending on the phosphorus atom, but they are preferably the same. s is preferably zero. The number of phosphorus atoms in 1 molecule of the phosphite-based compound is preferably from 1 to 4, more preferably 1 or 2, and particularly preferably 2.

Examples of the group represented by R$^a$ include the same groups as those described as R$^1$ to R$^3$, which will be described later. When the phosphite-based compound contains a plurality of R$^a$s, they may be different from each other, but preferably the same.

Examples of the group represented by R$^b$ include divalent to hexavalent, preferably divalent to tetravalent hydrocarbon groups having 1 to 20 carbon atoms, where all the bonds of R$^b$ are bonded to phosphorus atoms via -O-. Examples of the hydrocarbon group represented by R$^b$ include aliphatic hydrocarbon groups, aromatic hydrocarbon groups, groups in which an aliphatic hydrocarbon group and an aromatic hydrocarbon group are combined, and groups in which 2 or more aromatic hydrocarbon groups are combined.

The phosphite-based compound (also referred to as a phosphite ester compound) is preferably a compound in which the above s is zero (which is a fully esterified compound), more preferably at least one selected from the group consisting of a compound represented by the following Formula (C1-1), a compound represented by the following Formula

(C1-2), and a compound represented by the following Formula (C1-3), and further preferably a compound represented by the following Formula (C1-1) and/or a compound represented by the following Formula (C1-2).

[Chemical Formula 4]

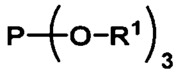

(C1-1)

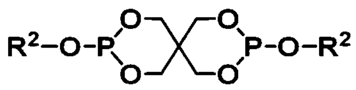

(C1-2)

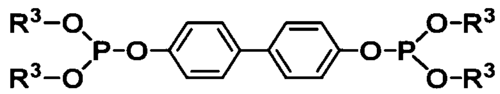

(C1-3)

[In the formulae, $R^1$ to $R^3$ each independently represents an aliphatic hydrocarbon group having 1 to 30 carbon atoms or an aromatic hydrocarbon group having 6 to 30 carbon atoms.]

In formula (C1-1), a plurality of $R^1$s may be the same or different, but are preferably the same. In formula (C1-2), a plurality of $R^2$s may be the same or different, but are preferably the same. In formula (C1-3), a plurality of $R^3$s may be the same or different, but are preferably the same.

The aliphatic hydrocarbon groups represented by $R^1$ to $R^3$ preferably have from 2 to 25 carbon atoms, more preferably from 8 to 23 carbon atoms, and further preferably from 12 to 20 carbon atoms.

Each of the aliphatic hydrocarbon groups represented by $R^1$ to $R^3$ may be linear or cyclic, and may be a saturated aliphatic hydrocarbon group or an unsaturated aliphatic hydrocarbon group. Among these, a saturated aliphatic hydrocarbon group is preferred, and a linear saturated aliphatic hydrocarbon group (which is an alkyl group) is more preferred. The aliphatic hydrocarbon groups represented by $R^1$ to $R^3$ may be straight-chain or branched, and are preferably straight-chain. Examples of the aliphatic hydrocarbon group include linear saturated aliphatic hydrocarbon groups (alkyl groups) such as methyl group, ethyl group, n-propyl group, n-butyl group, 2-ethylhexyl group, n-dodecyl group, isotridecyl group, n-tetradecyl group, n-hexadecyl group, n-octadecyl group, n-icosyl group, and tetracosyl group; and unsaturated aliphatic hydrocarbon groups such as ethenyl group, propenyl group, butenyl group, dodecenyl group, tetradecenyl group, hexadecenyl group, octadecenyl group, and icosenyl group.

The aromatic hydrocarbon groups represented by $R^1$ to $R^3$ preferably have from 6 to 25 carbon atoms, more preferably from 7 to 23 carbon atoms, and further preferably from 10 to 20 carbon atoms.

Examples of the aromatic hydrocarbon groups represented by $R^1$ to $R^3$ include aryl groups such as phenyl group and naphthyl group; and alkylaryl groups in which 1 to 5 alkyl groups each having 1 to 4 carbon atoms are bonded to an aryl group.

From the viewpoint of suppressing an increase in fluidity upon heating more effectively, $R^1$ to $R^3$ preferably represent aromatic hydrocarbon groups having 6 to 30 carbon atoms, more preferably aromatic hydrocarbon groups having 6 to 20 carbon atoms, and further preferably phenyl groups or groups in which 1 to 5 alkyl groups each having 1 to 4 carbon atoms are bonded to a phenyl group.

In particular, when $R^1$ is an aromatic hydrocarbon group, the $R^1$ preferably represents a phenyl group or a group in which 1 to 3 alkyl groups each having 1 to 4 carbon atoms are bonded to a phenyl group.

When $R^2$ and $R^3$ are aromatic hydrocarbon groups, the $R^2$ and the $R^3$ preferably represent groups in which 1 to 5 alkyl groups, each having 1 to 4 carbon atoms, are bonded to a phenyl group, and more preferably groups in which at least 1 to 3 tert-butyl groups are bonded to a phenyl group. The bonding position of the alkyl group(s) having 1 to 4 carbon atoms to a phenyl group is not particularly limited, and is preferably any one of the 2-position, 2,4-positions, 2,6-positions, and 2,4,6-positions with respect to the bond of the phenyl group to -O-P. Among these, any of a phenyl group having a tert-butyl group at the 2-position and optionally having alkyl groups each having 1 to 3 carbon atoms at the 4- and 6-positions; a phenyl group having tert-butyl groups at the 2- and 6-positions and optionally having an alkyl group having 1 to 3 carbon atoms at the 4-position; and a phenyl group having tert-butyl groups at the 2-, 4-, and 6-positions is preferred.

Specific examples of the phosphite-based compound include compounds represented by Formula (C1-1) such as triphenyl phosphite, tris(p-cresyl) phosphite, tris(4-tert-butylphenyl)phosphite, trisnonylphenyl phosphite, trilauryl phosphite, trioleyl phosphite, diphenyl mono(2-ethylhexyl)phosphite, tristearyl phosphite, and tris(2,4-di-t-butylphenyl) phosphite; compounds represented by Formula (C1-2) such as bis(2,4-di-t-butylphenyl)pentaerythritol diphosphite, bis(2,4,6-tri-t-butylphenyl)pentaerythritol diphosphite, bis(2,6-di-t-butyl-4-methylphenyl)pentaerythritol diphosphite, and distearyl pentaerythritol diphosphite; and compounds represented by Formula (C1-3) such as tetrakis(2,4-di-t-butylphenyl)-4,4'-biphenylene diphosphite.

The phosphate-based compound (also referred to as a phosphoric acid ester compound) is a compound containing 1 or more phosphorus atoms, each forming a P=O structure and having 3 bonds, where s number of -OH groups, t number of $-OR^a$ groups, and u number of $-O-R^b-$groups are bonded to each phosphorus atom forming a P=O structure (in the $-O-R^b-$ group, -O- is bonded to the phosphorus atom forming the P=O structure, and $R^b$ is bonded to a phosphorus atom forming another P=O structure via another -O-), provided that s+t+u = 3, t is 1 or more, u is zero when the number of the P=O structure is 1, and u is 1 or 2 when the number of the P=O structure is 2 or more. When the phosphate-based compound has 2 or more P=O structures, s, t, and u may be different depending on the P=O structure, but preferably represent the same. s is preferably 1 or 2. $R^a$ and $R^b$ represent the same as those described above. The number of P=O structure in 1 molecule of the phosphate-based compound is preferably 1 or 2, and more preferably 1.

The phosphate-based compound is preferably a compound represented by the following Formula (C2).

[Chemical Formula 5]

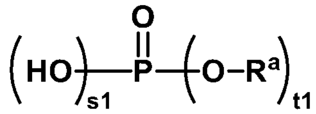

(C2)

[In Formula (C2), s1 represents an integer of from 0 to 2, t1 represents an integer of from 1 to 3, and $R^a$ represents the same as those described above, provided that s1 and t1 satisfy s1 + t1 = 3]

When the compound represented by Formula (C2) has a plurality of $R^a$s, the plurality of $R^a$s may be the same or different, but preferably the same.

s1 preferably represents 1 or 2.

The compound represented by Formula (C2) may be a compound in which all the $R^a$s are aromatic hydrocarbon groups having 6 to 30 carbon atoms (hereinafter sometimes referred to as an aromatic phosphoric acid ester compound), or a compound in which all the $R^a$s are aliphatic hydrocarbon groups having 1 to 30 carbon atoms (hereinafter sometimes referred to as an aliphatic phosphoric acid ester compound). The compound represented by Formula (C2) is preferably the aliphatic phosphoric acid ester compound. The aliphatic phosphoric acid ester compound is more preferably a compound with s1 of 1 or 2 (acid-type compound), further preferably a compound represented by the following Formula (C2-1), and particularly preferably a compound represented by the following Formula (C2-2).

[Chemical Formula 6]

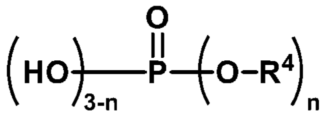

(C2-1)

[In Formula (C2-1), $R^4$ represents an aliphatic hydrocarbon group having 1 to 30 carbon atoms, and n represents 1 or 2.]

[Chemical Formula 7]

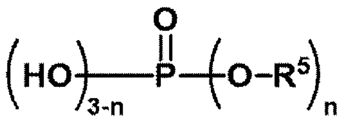

(C2-2)

[In Formula (C2-2), $R^5$ represents an alkyl group having 1 to 30 carbon atoms, and n represents 1 or 2.]

When the compound represented by Formula (C2-1) has a plurality of $R^4$s, the plurality of $R^4$s may be the same or different, and preferably the same. When the compound represented by Formula (C2-2) has a plurality of $R^5$s, the plurality of $R^5$s may be the same or different, and preferably the same.

The aliphatic hydrocarbon group represented by $R^4$ preferably has from 1 to 25, more preferably from 2 to 23, and further preferably from 2 to 20 carbon atoms. In particular, the use of the phosphate-based compound in which $R^4$ represents an aliphatic hydrocarbon group having 8 to 23 or 12 to 20 carbon atoms can suppress an increase in fluidity upon heating more effectively. The content of the phosphate-based compound represented by Formula (C2-1) in which $R^4$ represents an aliphatic hydrocarbon group having 8 to 23 carbon atoms (preferably 12 to 20 carbon atoms) is preferably 20% by mass or more, more preferably 40% by mass or more, further preferably 50% by mass or more, particularly preferably 80% by mass or more based on 100% by mass in total of the components (C), and the content may be 100% by mass.

The alkyl group represented by $R^5$ preferably has from 1 to 25, more preferably from 2 to 23, and further preferably from 2 to 20 carbon atoms. In particular, the use of the phosphate-based compound in which $R^5$ represents an alkyl group having 8 to 23 or 12 to 20 carbon atoms can suppress an increase in fluidity upon heating more effectively. The content of the phosphate-based compound represented by Formula (C2-2) in which $R^5$ represents an alkyl group having 8

to 23 (preferably 12 to 20 carbon atoms) is preferably 20% by mass or more, more preferably 40% by mass or more, further preferably 50% by mass or more, particularly preferably 80% by mass or more based on 100% by mass in total of the components (C), and the content may be 100% by mass.

Examples of the aliphatic hydrocarbon group represented by $R^4$ include the same as those described as the aliphatic hydrocarbon groups represented by $R^1$ to $R^3$. Among these, a linear aliphatic hydrocarbon group is preferred, and a linear saturated aliphatic hydrocarbon group is more preferred.

Examples of the aliphatic hydrocarbon group represented by $R^5$ include the same as those described as the alkyl groups represented by $R^1$ to $R^3$.

In Formulae (C2-1) and (C2-2), n may represent 1 or 2, and a mixture of a compound in which n is 1 and a compound in which n is 2 may be used.

Specific examples of the phosphate-based compound include monomethyl or dimethyl acid phosphate, monoethyl or diethyl acid phosphate, monobutyl or dibutyl acid phosphate, mono-2-ethylhexyl or di-2-ethylhexyl phosphate, monoisotridecyl or diisotridecyl acid phosphate, monolauryl or dilauryl acid phosphate, monostearyl or distearyl acid phosphate, monooleyl or dioleyl acid phosphate, and monotetracosyl or ditetracosyl acid phosphate. These phosphate-based compounds may be used alone or in combination with two or more types. The phosphate-based compound preferably comprises at least one selected from the group consisting of monoethyl acid phosphate, diethyl acid phosphate, monostearyl acid phosphate, and distearyl acid phosphate, and mixtures thereof.

As the phosphate-based compound, commercially available products may be used. Examples of the product include LBT-1830 and LBT-1813 manufactured by Sakai Chemical Industry Co., Ltd., JP-502, JP-513, and JP-524R manufactured by Johoku Chemical Co., Ltd., and ADK STAB AX-71 manufactured by ADEKA CORPORATION.

As the component (C), one or two or more components may be used in combination.

The component (C) is preferably the phosphate-based compound.

The component (C) preferably comprises at least one selected from the group consisting of the compound represented by Formula (C1-1), the compound represented by Formula (C1-2), and the compound represented by Formula (C2-1). These compounds can suppress an increase in fluidity upon heating more effectively. From the viewpoint of suppressing an increase in fluidity upon heating more effectively, the component (C) preferably comprises at least one selected from the group consisting of the phosphite-based compound represented by Formula (C1-1) in which $R^1$ is an aromatic hydrocarbon group having 6 to 30 carbon atoms, the phosphite-based compound represented by Formula (C1-2) in which $R^2$ is an aromatic hydrocarbon group having 6 to 30 carbon atoms, and the phosphate-based compound represented by Formula (C2-2). Although the detailed mechanism is still unclear, it is considered that the formation of a coating layer on the component (B) affects the suppression of fluidity.

In the present invention, the content of the component (C) is from 0.02 parts by mass to 1.4 parts by mass, preferably from 0.03 parts by mass to 1.2 parts by mass, more preferably from 0.05 parts by mass to 1.0 part by mass, and further preferably from 0.1 parts by mass to 0.6 parts by mass, relative to 100 parts by mass in total of the component (A) and the component (B). The component (C) is considered to form a surface coating of the component (B). Although the detailed mechanism is still unclear, it is considered that the structures of the component (C), such as P-OH, P-$OR^a$, P-O-$R^b$-, and P=O, facilitate coordination of the component (C) on the surface of the component (B), making the formation of the surface coating easier. The formation of such a surface coating is considered to provide both an effect due to improvement in the dispersibility of component (B) and an effect of suppressing the degradation behavior of the resin or elastomer caused by component (B). Therefore, the electromagnetic wave-shielding composition of the present invention exhibits improved heat stability and retention stability. When the content of the component (C) is less than 0.02 parts by mass, it becomes difficult to achieve the desired characteristics. On the other hand, when the content of the component (C) is more than 1.4 parts by mass, the component (C) may undesirably act as a plasticizer, thereby worsening the fluidity upon heating.

The content of the component (C) is, for example, from 0.05 parts by mass to 2.7 parts by mass, preferably from 0.1 parts by mass to 2.0 parts by mass, more preferably from 0.3 parts by mass to 1.2 parts by mass, and further preferably from 0.4 parts by mass to 1.0 part by mass relative to 100 parts by mass of the component (B).

The total content of the component (A), the component (B), and the component (C) in the electromagnetic wave-shielding composition of the present invention is preferably 90% by mass or more, more preferably 95% by mass or more, further preferably 98% by mass or more, and the total content may be 100% by mass, or may be 99.5% by mass or less.

[Other Component(s)]

The electromagnetic wave-shielding composition of the present invention may further contain, depending on the purpose, additives such as an antioxidant, a heat-resistance stabilizer, an ultraviolet absorbing agent, an antistatic agent, a dye, a pigment, a lubricating agent, a plasticizer, a mold release agent, a crystallization accelerator, a crystalline nucleating agent, and an epoxy compound. The total amount of the additive added is preferably 10 parts by mass or less, more preferably 5 parts by mass or less, and further preferably 2 parts by mass or less, relative to 100 parts by mass in total

of the component (A) and the component (B).

The antioxidant is preferably a hindered phenol-based antioxidant. Specific examples thereof include 3,5-di-t-butyl-4-hydroxytoluene, n-octadecyl-β-(4'-hydroxy-3',5'-di-t-butylphenyl)propionate, tetrakis[methylene-3-(3',5'-di-t-butyl-4'-hydroxyphenyl)propionate]methane, 1,3,5-trimethyl-2,4,6-tris(3',5'-di-t-butyl-4'-hydroxybenzyl)benzene, calcium (3,5-di-t-butyl-4-hydroxybenzyl-monoethyl-phosphate), triethylene glycol bis[3-(3-t-butyl-5-methyl-4-hydroxyphenyl) propionate], 3,9-bis[1,1-dimethyl-2-{β-(3-t-butyl-4-hydroxy-5-methylphenyl)propionyloxy}ethyl]2,4,8, 10-tetraoxaspiro [5,5]undecane, bis[3,3-bis(4'-hydroxy-3'-t-butylphenyl)butyric acid]glycol ester, 2,2'-ethylidenebis(4,6-di-t-butylphenol), N,N'-bis[3-(3,5-di-t-butyl-4-hydroxyphenyl)propionyl]hydrazine, 2,2'-oxamidebis[ethyl-3-(3,5-di-t-butyl-4-hydroxyphenyl)propionate], 1,3,5-tris(3',5'-di-t-butyl-4'-hydroxybenzyl)-S-triazine-2,4,6(1H,3H,5H)-trione, 1,3,5-tris(4-t-butyl-3-hydroxy-2,6-dimethylbenzyl)isocyanurate, 3,5-dit-butyl-4-hydroxyhydrocinnamic acid triester with-1,3,5-tris(2-hydroxyethyl)-S-triazine-2,4,6(1H,3H,5H), and N,N'-hexamethylenebis(3,5-di-t-butyl-4-hydroxybenzenepropionamide). These antioxidants may be used alone or in the form of a mixture. The amount of the antioxidant is preferably 5 parts by mass or less, more preferably 3 parts by mass or less, and further preferably 1 part by mass or less, relative to 100 parts by mass in total of the component (A) and the component (B). The amount of the antioxidant may be 0.05 parts by mass or more, or 0.1 parts by mass or more. Accordingly, the amount of the antioxidant is preferably from 0.05 parts by mass to 5 parts by mass, more preferably from 0.1 parts by mass to 3 parts by mass, and further preferably from 0.1 parts by mass to 1 part by mass relative to 100 parts by mass in total of the component (A) and the component (B).

Examples of the mold release agent include a long-chain fatty acid, an ester or a metal salt thereof, an amide-based compound, a polyethylene wax, silicone, and polyethylene oxide. The long-chain fatty acid preferably has 12 or more carbon atoms, and examples thereof include stearic acid, 12-hydroxystearic acid, behenic acid, and montanic acid. Part or all of the carboxyl group(s) in the long-chain fatty acid may be esterified with a monoglycol or a polyglycol, or may be in the form of a metal salt. Examples of the amide-based compound include ethylene bis-terephthalamide and methylene bis-stearylamide. These mold release agents may be used alone or in the form of a mixture. The content of the mold release agent is preferably 5 parts by mass or less, more preferably 3 parts by mass or less, and further preferably 1 part by mass or less, relative to 100 parts by mass in total of the component (A) and the component (B). The content of the mold release agent may be 0.1 parts by mass or more, or 0.3 parts by mass or more. Accordingly, the amount of the mold release agent is preferably from 0.1 parts by mass to 5 parts by mass, more preferably from 0.3 parts by mass to 3 parts by mass, and further preferably from 0.3 parts by mass to 1 part by mass, relative to 100 parts by mass in total of the component (A) and the component (B).

The electromagnetic wave-shielding composition of the present invention may contain components other than those mentioned above (for example, thermosetting resins and fibrous components such as glass fibers), as needed, though they are not usually contained. For example, in the electromagnetic wave-shielding composition of the present invention, the content of a thermosetting resin may be 0.2% by mass or less and the content of a fibrous component may be 4% by mass or less.

The method for producing the electromagnetic wave-shielding composition of the present invention is not particularly limited, and, for example, the composition can be obtained by dry-blending the components (A), (B), (C), and other component(s), as necessary, and melt-kneading the mixture using a single- or twin-screw melt kneader, or a typical mixer for thermoplastic resins or thermoplastic elastomers, such as a kneading heater. After that, if necessary, the resulting composition may be pelletized in a subsequent granulation step. Furthermore, if necessary, the component (B) may be treated (mixed) with the component (C) in advance to be further mixed with the component (A).

The electromagnetic wave-shielding composition of the present invention exhibits high productivity in mass production because the increase in fluidity upon heating is suppressed. The electromagnetic wave-shielding composition of the present invention has a ΔMFR, as measured in accordance with ISO 1133 and determined by the following formula, of preferably 20 g/10min or less, more preferably 15 g/10min or less, and the ΔMFR may be 10 g/10min or less. The lower limit of the ΔMFR of the electromagnetic wave-shielding composition of the present invention is not particularly limited, and may be 1 g/10min or more. The ΔMFR can be measured by the method described in the Examples below.

$$\Delta MFR = (\text{MFR in retention for 25 minutes}) - (\text{MFR in retention for 5 minutes})$$

(In the formula, the MFR in retention for 25 minutes is a melt flow rate measured with a preheating time of 25 minutes, and the MFR in retention for 5 minutes is a melt flow rate measured with a preheating time of 5 minutes. The melt flow rate is measured under a load of 2160 g at a measurement temperature of the melting point of the component (A) + 25°C.)

When a molded article is formed from the electromagnetic wave-shielding composition of the present invention, the method for molding the electromagnetic wave-shielding composition is not particularly limited, and the molded article can be formed by injection molding, extrusion molding, press molding, blow molding, or the like. Among these, injection molding is preferred because it offers a high degree of freedom in the shape of the obtained molded article. Particularly,

injection molding is preferred because the high heat stability and the retention stability (that is, the effect of suppressing an increase in fluidity upon heating) of the electromagnetic wave-shielding composition of the present invention can be effectively exhibited in injection molding.

The molded article produced from the electromagnetic wave-shielding composition of the present invention comprises the component (A) and the component (B) at a mass ratio (component (A)/component (B)) in the range of from 5/95 to 95/5, and the component (C) in an amount of from 0.02 parts by mass to 1.4 parts by mass relative to 100 parts by mass in total of the component (A) and the component (B), wherein the molded article having a thickness of 2.0 mm exhibits magnetic field shielding performance of 3 dB or more at frequencies of both 1 MHz and 10 MHz, as measured by the KEC method. The molded article may also contain, as other component(s), various additives described above. Preferred embodiments of the type and the amount of each component contained in the molded article are the same as those described above. The magnetic field shielding performance of the molded article having a thickness of 2.0 mm, measured by the KEC method, is preferably 5 dB or more, and more preferably 8 dB or more at frequencies of both 1 MHz and 10 MHz. The upper limit of the magnetic field shielding performance is not limited, and is, for example, 40 dB.

As described above, since the electromagnetic wave-shielding composition of the present invention is preferably subjected to injection molding, the molded article produced from the electromagnetic wave-shielding composition of the present invention preferably has a gate mark. The "gate mark" as used herein refers to a trace, such as a concavity or convexity, formed due to a gate through which the composition is injected when a molded article is produced by injection molding.

The shape of the molded article is not particularly limited, and the molded article can be formed so as to have a desired shape (such as a flat plate or a hose shape, or a casing), thickness, and size, depending on the intended use. The thickness of the molded article is, for example, from 0.1 mm to 10 mm, and is preferably from 0.3 mm to 5 mm.

The molded article produced from the electromagnetic wave-shielding composition of the present invention exhibits electromagnetic wave-shielding performance. As a method for evaluating the electromagnetic wave-shielding performance, the KEC method developed by the KEC Electronic Industry Development Center (KEC) is known. This KEC method is a technique that enables separate measurement of the shielding performance for the electric field component and the magnetic field component of electromagnetic waves generated in the near field. In this method, electromagnetic waves transmitted from a transmitting antenna (transmitting jig) are received by a receiving antenna (receiving jig) through a sheet-shape measurement sample. The attenuation of the received electromagnetic waves is measured and quantified as an attenuation rate (measurement unit: dB). In the present invention, the attenuation rate of the magnetic field component is measured at room temperature in the frequency range of from 0.1 MHz to 1000 MHz using a sample obtained by molding the electromagnetic wave-shielding composition into a test piece having a predetermined thickness (2.0 mm), and the attenuation rates at 1 MHz and 10 MHz, important frequencies for the present invention, are confirmed. Specifically, the measurement can be carried out by the method described in the Examples below.

The molded article having a thickness of 2.0 mm (for example, a sheet) obtained by molding the electromagnetic wave-shielding composition of the present invention is capable of exhibiting the shielding performance against a magnetic field (attenuation rate) of 3 dB or more at frequencies of both 1 MHz and 10 MHz, as measured by the KEC method. The shielding performance (attenuation rate) is preferably 5 dB or more, and more preferably 8 dB or more. The upper limit of the shielding performance (attenuation rate) is not particularly limited, and is, for example, 40 dB.

The molded article obtained by molding the electromagnetic wave-shielding composition of the present invention exhibits electromagnetic wave-shielding performance at low frequencies of, for example, from 1 kHz to 1 GHz (preferably from 10 kHz to 100 MHz, and more preferably from 0.1 MHz to 100 MHz). Accordingly, the electromagnetic wave-shielding composition of the present invention can be used for the purpose of shielding the low-frequency electromagnetic waves, suitably for, for example, molding a low-frequency electromagnetic wave shielding body. Specifically, the electromagnetic wave-shielding composition of the present invention can be used in applications such as housings, and molded articles made of resins or elastomers, which are used in the vicinity of power conversion devices installed inside the various electronic devices and electric vehicles, as well as data processing devices such as cameras and radio wave receivers.

The present application claims the benefit of priority to Japanese Patent Application No. 2023-035389 filed on March 8th, 2023. The entire contents of the specification of Japanese Patent Application No. 2023-035389 filed on March 8th, 2023, are incorporated herein by reference.

EXAMPLES

Hereinafter, the present invention will be described in more detail with Examples. However, the scope of the present invention is not limited by the Examples.

< Examples 1 to 15 and Comparative Examples 1 to 9>

In Examples 1 to 15 and Comparative Examples 1 to 9, the following raw were used as components of

electromagnetic wave-shielding compositions.

[Component (A)]

A-1: Polybutylene terephthalate, melting point: 225°C, resin drying temperature: 130°C (manufactured by Toyobo Co., Ltd., inherent viscosity: 0.83 dl/g)
A-2: Polybutylene terephthalate, melting point: 225°C, resin drying temperature: 130°C (manufactured by Toyobo Co., Ltd., inherent viscosity: 1.32 dl/g)
A-3: Polyester elastomer, melting point: 205°C, resin drying temperature: 100°C
Copolymer having a composition ratio of PBT/HPCD = 70/30 (% by mass) (PELPRENE (registered trademark) manufactured by Toyobo Co., Ltd., reduced viscosity: 1.20 dl/g, Shore D hardness: 60)

The polyester elastomer (A-3) was produced by the following method. In a reaction vessel, 70 parts by mass of polybutylene terephthalate (PBT) having a number average molecular weight of 30000 and 30 parts by mass of polycarbonate diol (HPCD) containing 1,6-hexanediol residues having a number average molecular weight of 10000 were stirred at a temperature within the range of 225°C to 245°C at 130 Pa for 1 hour. After the mixture turned transparent with the progression of the ester exchange reaction, the contents were taken out and cooled to obtain the polyester elastomer (A-3).

A-4: Polyester elastomer, melting point: 180°C, resin drying temperature: 100°C
Polyester elastomer of terephthalic acid (TPA)//1,4-butanediol (BD)/polyoxytetramethylene glycol (PTMG, number average molecular weight: 2000) in a molar ratio of 100//75/25 (mol%) (reduced viscosity: 2.50 dl/g, acid value: 21 eq/ton, Shore D hardness: 31)
A-5: Polyamide 6, melting point: 225°C, resin drying temperature: 100°C (manufactured by Toyobo Co., Ltd., relative viscosity: 2.2)

The above melting points, intrinsic viscosity, reduced viscosity, Shore D hardness, acid values, and relative viscosity were measured using the following methods.

<Melting Point>

A measurement sample of 5 mg was placed in an aluminum pan, and the pan was sealed with a pressed lid. Subsequently, the measurement was conducted using DSC220, a differential scanning calorimeter manufactured by Seiko Instruments Inc., by heating the sample from 20°C to 270°C at a heating rate of 10°C/min under a nitrogen atmosphere. The endothermic peak associated with melting in the obtained thermogram curve was determined as the melting point.

<Intrinsic Viscosity>

A solution was prepared by dissolving 0.1 g of a sample in 25 ml of a mixed solvent of phenol/tetrachloroethane (mass ratio: 6/4), and the intrinsic viscosity was measured at 30°C using an Ubbelohde viscometer (Unit: dl/g).

<Reduced Viscosity>

A solution was prepared by dissolving 0.05 g of a sample in 25 ml of a mixed solvent of phenol/tetrachloroethane (mass ratio: 60/40), and the reduced viscosity was measured at 30°C using an Ostwald viscometer (Unit: dl/g).

<Shore D Hardness>

The measurement was conducted in accordance with JIS K 7215:1986. The test piece was prepared by stacking 3 injection-molded articles produced at a cylinder temperature of 240°C and a mold temperature of 50°C (length: 100 mm, width: 100 mm, thickness: 2 mm), at a measurement pressure of 5000 g, using a durometer with a type-D indenter. The value at 5 seconds after the start of the measurement was determined as the D hardness (Shore D hardness).

<Acid Value>

A solution prepared by dissolving 0.5 g of a sample in 25 ml of benzyl alcohol was titrated using a 0.01 mol/l sodium hydroxide solution in benzyl alcohol. As an indicator, a solution prepared by dissolving 0.10 g of phenolphthalein in a mixed liquid of 50 mL of ethanol and 50 mL of water was used.

<Relative Viscosity>

A sample solution was prepared by dissolving 0.25 g of polyamide resin in 25 ml of 98% sulfuric acid. Subsequently, 10 ml of the sample solution was introduced into an Ostwald viscometer, and the efflux time was measured at 20°C. Then, the solvent (98% sulfuric acid) was separately introduced into an Ostwald viscometer, and the efflux time was measured at 20°C. The relative viscosity was calculated using the following formula:

$$RV = T/T0$$

RV: Relative viscosity
T: Efflux time of the sample solution
T0: Efflux time of the solvent

[Component (B)]

B-1: Fe-Si-Al alloy (average particle diameter D50: approximately 40 μm, shape: flat), "FME3D-AH" manufactured by Sanyo Special Steel Co., Ltd.
B-2: Fe-Si-Cr alloy (average particle diameter D50: approximately 20 μm, shape: flat), "JEMK" manufactured by KINSEI MATEC CO., LTD.
B-3: Mn-Zn ferrite (average particle diameter D50: approximately 50 μm, shape: flat), "MZ-05P050" manufactured by Powdertech Co.,Ltd.

The average particle diameter D50 was determined by placing ethanol and the powder sample in a beaker, dispersing the powder for 30 seconds using an ultrasonic cleaner, introducing the dispersion into the chamber of a sample circulating unit of a laser diffraction/scattering type particle size distribution analyzer MT3300EXII (manufactured by MicrotracBEL Corporation), and measuring the volume distribution with a measurement time of 120 seconds. The particle diameter corresponding to 50% of the cumulative volume-based distribution was taken as the average particle diameter D50.

[Component (C)]

C-1: "ADK STAB AX-71" (stearyl acid phosphate, $O=P(OC_{18}H_{37}O)_n(OH)_{3-n}$, where n is 1 or 2) manufactured by ADEKA Corporation
C-2: "JP-502" (ethyl acid phosphate, $O=P(C_2H_5O)_n(OH)_{3-n}$, where n is 1 or 2) manufactured by Johoku Chemical Co., Ltd.
C-3: "JP-360" (triphenyl phosphite) manufactured by Johoku Chemical Co., Ltd.
C-4: "PEP-36" (bis(2,6-di-t-butyl-4-methylphenyl)pentaerythritol diphosphite) manufactured by Clariant Corporation

[Other phosphorus compounds]

C-5: "PEP-Q" (tetrakis(2,4-di-tert-butylphenyl)-4,4'-biphenyl diphosphonate) manufactured by Clariant Corporation (the compound represented by the following formula)

[Chemical Formula 8]

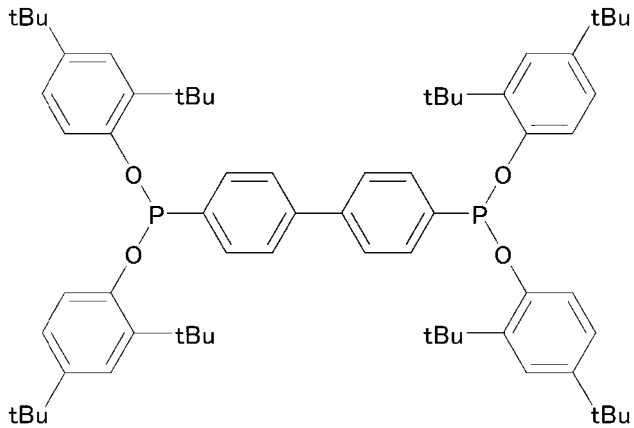

C-6: "JC-263" (triphenylphosphine) manufactured by Johoku Chemical Co., Ltd.
C-7: "Exolit OP 1240" (aluminum phosphinate) manufactured by Clariant Corporation

[Other Additives]

Antioxidant: IRGANOX1010, manufactured by BASF Corporation
Mold release agent: LICOWAX-OP, manufactured by Clariant Corporation

The pellets of an electromagnetic wave-shielding composition were produced by dry blending the components shown in Table 1 at a ratio shown in Table 1 (parts by mass), and melt kneading the mixture using a twin-screw extruder (STS-35, manufactured by COPERION Corporation) under the following conditions: a cylinder temperature set to the melting point of each component (A) + 25°C, a discharge rate of 20 kg/hr, and a screw rotation speed of 180 rpm. Using the obtained pellets, ΔMFR was measured by the method described below. Also, using the obtained pellets, a test piece was prepared by the method described below, and the electromagnetic wave-shielding performance (dB) at 1 MHz and 10 MHz was measured. The measurement results of the electromagnetic wave-shielding compositions of Examples 1 to 15 and Comparative Examples 1 to 9 are shown in Table 1.

<Shielding Performance Against Magnetic Field Component by the KEC Method>

To measure the shielding performance against magnetic field component, the test piece was prepared (by molding) and measured, in accordance with the following procedure.
A flat-plate (sheet) with dimensions of 150 mm × 150 mm × 2 mm (thickness) was prepared by injection molding using an injection molding machine manufactured by Toshiba Machine Co., Ltd., at a cylinder temperature set at the melting point of the each component (A) + 25°C and a mold temperature set to 50°C. Subsequently, the electromagnetic wave-shielding performance was measured by the KEC method.
The electromagnetic wave-shielding performance (the shielding performance against magnetic field component) of the sheet having a thickness of 2.0 mm was measured by the KEC method. The test piece was placed between a pair of cells designed for evaluating the magnetic field shielding effect, and then frequency was continuously swept from 0.1 MHz to 1000 MHz. In particular, the attenuation rates (relative values) at 1 MHz and 10 MHz, calculated from signal levels at the transmitting and receiving antennas, were taken as representative values of the electromagnetic wave-shielding performance.

<Degree of Increase in Fluidity Upon Heating (ΔMFR)>

The degree of increase in the fluidity upon heating the electromagnetic wave-shielding composition was evaluated based on the measurement results of the melt flow rates measured with different preheating times. In the following evaluation, the preheating time was regarded as the heating time of the electromagnetic wave-shielding composition.
Using a melt indexer (manufactured by Toyo Seiki Seisaku-sho, Ltd.), the MFR in retention for 25 minutes and the

MFR in retention for 5 minutes were measured in accordance with ISO 1133, under a load condition of 2160 g, using pellets with a moisture content adjusted to 200 ppm or less by drying them for 3 hours at the predetermined resin drying temperature dependent on each component (A). The test temperature was set to the melting point of the component (A) + 25°C (250°C for the polybutylene terephthalate resins A-1 and A-2, 230°C for the polyester elastomer A-3, 205°C for the polyester elastomer A-4, and 250°C for the polyamide resin A-5). The obtained measurement results were substituted into the following formula to calculate the ΔMFR.

$$\Delta MFR = (MFR\ in\ retention\ for\ 25\ minutes) - (MFR\ in\ retention\ for\ 5\ minutes)$$

(In the formula, the MFR in retention for 25 minutes is a melt flow rate measured in accordance with ISO 1133, with a preheating time of 25 minutes, and the MFR in retention for 5 minutes is a melt flow rate measured in accordance with ISO 1133, with a preheating time of 5 minutes.

[Table 1]

| | | Examples | | | | | | | | | | | | | | | Comparative Examples | | | | | | | | |
|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 1 | 2 | 3 | 4 | 5 | 6 | 7 | 8 | 9 |
| Composition (parts by mass) | (A-1) Polybutylene terephthalate | 52 | | | | | | 52 | | | | | | | | | | | | | | | | | |
| | (A-2) Polybutylene terephthalate | | 52 | | | | | | | | | | | 52 | | | | | | | | | | | 52 |
| | (A-3) Polyester elastomer | | | 48 | | | 48 | | 48 | 48 | 48 | 85 | 20 | | 48 | 50 | 48 | 48 | 48 | 48 | 48 | 48 | 48 | 48 | |
| | (A-4) Polyester elastomer | | | | 48 | | | | | | | | | | | | | | | | | | | | |
| | (A-5) Polyamide 6 | | | | | 52 | | | | | | | | | | | | | | | | | | | |
| | (B-1) Fe-Si-Al alloy | 48 | 48 | 52 | 52 | 48 | 52 | 48 | 52 | 52 | 52 | 15 | 80 | | | | 52 | 52 | 52 | 52 | 52 | 52 | 52 | | |
| | (B-2) Fe-Si-Cr alloy | | | | | | | | | | | | | 48 | 52 | | | | | | | | | 52 | 48 |
| | (B-3) Ferrite | | | | | | | | | | | | | | | 50 | | | | | | | | | |
| | (C-1) Phosphate-based compound | | | | | | 0.4 | | | | 0.2 | | | | | | | 0.01 | | 1.5 | | | | | |
| | (C-2) Phosphate-based compound | 0.4 | 0.4 | 0.4 | 0.4 | 0.4 | | | | 0.05 | 0.2 | 0.4 | 0.4 | 0.4 | 0.4 | 0.4 | | | 0.01 | | | | | | |
| | (C-3) Phosphite-based compound | | | | | | | 0.4 | | | | | | | | | | | | | | | | | |
| | (C-4) Phosphite-based compound | | | | | | | | 0.4 | | | | | | | | | | | | | | | | |
| | (C-5) Phosphorus compound | | | | | | | | | | | | | | | | | | | | 0.4 | | | | |
| | (C-6) Phosphorus compound | | | | | | | | | | | | | | | | | | | | | 0.4 | | | |
| | (C-7) Phosphorus compound | | | | | | | | | | | | | | | | | | | | | | 0.4 | | |
| | Antioxidant | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | Mold release agent | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Content of Component (C) Relative to 100 parts by mass of Component (B) | | 0.83 | 0.83 | 0.77 | 0.77 | 0.83 | 0.77 | 0.83 | 0.77 | 0.10 | 0.77 | 2.67 | 0.50 | 0.83 | 0.77 | 0.80 | 0 | 0.02 | 0.02 | 2.88 | 0 | 0 | 0 | 0 | 0 |
| Evaluation | Shielding Performance against Magnetic Field at 1 MHz measured by KEC method (dB) | 9 | 9 | 10 | 10 | 10 | 9 | 10 | 9 | 9 | 9 | 5 | 19 | 8 | 8 | 5 | 9 | 9 | 9 | 9 | 9 | 9 | 9 | 8 | 8 |
| | Shielding Performance against Magnetic Field at 10 MHz measured by KEC method (dB) | 10 | 9 | 9 | 10 | 10 | 10 | 10 | 10 | 10 | 9 | 5 | 20 | 8 | 9 | 5 | 9 | 10 | 10 | 9 | 9 | 10 | 10 | 8 | 8 |
| | ΔMFR (g/10min) | 12.1 | 8.7 | 5.1 | 3.6 | 9.3 | 3.1 | 4.7 | 4.5 | 14.7 | 4.8 | 11.3 | 3.1 | 16.3 | 5.9 | 8.8 | 32.7 | 29.3 | 30.7 | 23.6 | 34.1 | 25.3 | 30.1 | 66.5 | 91.0 |

As is clear from Table 1, the electromagnetic wave-shielding compositions of Examples 1 to 15 of the present invention exhibit high electromagnetic wave-shielding performance and have suppressed increases in the fluidity upon heating (i.e., high heat stability and retention stability) because the component (B), which is the soft-magnetic metal powder, the component (C), which is at least one selected from the group consisting of the phosphite-based compound and the phosphate-based compound, are mixed with the thermoplastic resin and/or the thermoplastic elastomer as the component (A) in a specific ratio. In contrast, the electromagnetic wave-shielding compositions of Comparative Examples 1 to 9 exhibit inferior heat stability and retention stability, which may lead to concerns about adverse effects on the appearance and mass productivity of the molded articles obtained from the electromagnetic wave-shielding compositions.

INDUSTRIAL APPLICABILITY

According to the present invention, the composition containing the resin or the elastomer can be obtained, with suppressed increase in fluidity upon heating and high electromagnetic wave-shielding performance, and high-productivity production of components where electromagnetic wave noise may pose a problem can be expected. In recent years, the number of noise sources mounted on automobiles has been increasing, and the influence of electromagnetic noise, particularly at low frequencies, on radio waves and in-vehicle cameras has become a significant issue, making countermeasures essential. By applying the electromagnetic wave-shielding composition of the present invention, not only weight reduction through the replacement of metals but also improvement in degree of freedom in shape can be expected. Furthermore, the use of the electromagnetic wave-shielding composition of the present invention can impart the electromagnetic wave-shielding performance to casing materials that normally do not have noise countermeasure functions, making the production of safer components possible. Therefore, the electromagnetic wave-shielding composition of the present invention can be regarded as a groundbreaking material.

## Claims

**1.** An electromagnetic wave-shielding composition comprising:

a component (A), which is at least one selected from the group consisting of a thermoplastic resin and a thermoplastic elastomer;
a component (B), which is a soft-magnetic metal powder, at a mass ratio (component (A)/component (B)) in a range of from 5/95 to 95/5; and
a component (C), which is at least one selected from the group consisting of a phosphite-based compound and a phosphate-based compound, in an amount of from 0.02 parts by mass to 1.4 parts by mass relative to 100 parts by mass in total of the component (A) and the component (B),
wherein the electromagnetic wave-shielding composition molded into a sheet with a thickness of 2.0 mm exhibits magnetic field shielding performance of 3 dB or more at frequencies of both 1 MHz and 10 MHz when measured by the KEC method.

**2.** The electromagnetic wave-shielding composition according to claim 1,

wherein the electromagnetic wave-shielding composition has a ΔMFR of 20 g/10min or less, when measured in accordance with ISO 1133 and determined by the following equation:

$$\Delta MFR = (\text{MFR in retention for 25 minutes}) - (\text{MFR in retention for 5 minutes})$$

wherein the MFR in retention for 25 minutes refers to a melt flow rate measured with a preheating time of 25 minutes, the MFR in retention for 5 minutes refers to a melt flow rate measured with a preheating time of 5 minutes, and the measurement is conducted under a load of 2160 g at a measurement temperature of a melting point of the component (A) + 25°C.

**3.** The electromagnetic wave-shielding composition according to claim 1 or 2,
wherein the component (A) comprises at least one selected from the group consisting of a polyester-based resin, a polyester elastomer, a polycarbonate-based resin, a polyamide-based resin, a polyphenylene sulfide-based resin, and a polyolefin-based resin.

**4.** The electromagnetic wave-shielding composition according to claim 1 or 2,

wherein the component (B) comprises at least one powder selected from the group consisting of an Fe-Si alloy, an Fe-Si-Al alloy, an Fe-Si-Cr alloy, and ferrite.

**5.** The electromagnetic wave-shielding composition according to claim 1 or 2,
wherein the component (B) has a flat shape.

**6.** The electromagnetic wave-shielding composition according to claim 1 or 2,
wherein the component (B) has an average particle diameter D50 of from 1 μm to 100 μm.

**7.** The electromagnetic wave-shielding composition according to claim 1 or 2,

wherein the component (C) comprises at least one selected from the group consisting of a compound represented by the following Formula (C1-1), a compound represented by the following Formula (C1-2), and a compound represented by the following Formula (C2-1):

[Chemical Formula 1]

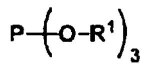 (C1-1)

wherein $R^1$ represents an aliphatic hydrocarbon group having 1 to 30 carbon atoms or an aromatic hydrocarbon group having 6 to 30 carbon atoms;

[Chemical Formula 2]

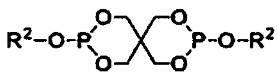 (C1-2)

wherein $R^2$ represents an aliphatic hydrocarbon group having 1 to 30 carbon atoms or an aromatic hydrocarbon group having 6 to 30 carbon atoms; and

[Chemical Formula 3]

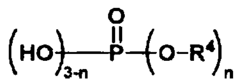 (C2-1)

wherein $R^4$ represents an aliphatic hydrocarbon group having 1 to 30 carbon atoms and n represents 1 or 2.

**8.** The electromagnetic wave-shielding composition according to claim 1 or 2,
wherein a content of the component (C) is from 0.05 parts by mass to 2.7 parts by mass relative to 100 parts by mass of the component (B).

**9.** A molded article formed from the electromagnetic wave-shielding composition according to claim 1 or 2.

**10.** Use of the electromagnetic wave-shielding composition according to claim 1 or 2 for shielding electromagnetic waves with frequencies ranging from 1 kHz to 1 GHz.

## INTERNATIONAL SEARCH REPORT

International application No.
**PCT/JP2024/007497**

**A. CLASSIFICATION OF SUBJECT MATTER**

***C08L 101/00***(2006.01)i; ***C08K 3/01***(2018.01)i; ***C08K 3/10***(2018.01)i; ***C08K 3/18***(2006.01)i; ***C08K 5/52***(2006.01)i; ***C08K 7/00***(2006.01)i
FI: C08L101/00; C08K5/52; C08K3/01; C08K3/10; C08K3/18; C08K7/00

According to International Patent Classification (IPC) or to both national classification and IPC

**B. FIELDS SEARCHED**

Minimum documentation searched (classification system followed by classification symbols)

C08L101/00; C08K3/01; C08K3/10; C08K3/18; C08K5/52; C08K7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-016388 A (TOYO INK SC HOLDINGS CO., LTD.) 21 January 2022 (2022-01-21) claims, paragraphs [0008], [0010], [0026], [0074]-[0075], examples 24, 32 | 1-10 |
| X | WO 2007/013436 A1 (SONY CHEMICAL & INFORMATION DEVICE CORP.) 01 February 2007 (2007-02-01) claims, paragraphs [0010], [0022], comparative examples 6B, 9B | 1-6, 8-10 |
| A | JP 2001-081327 A (TOKIN CORP.) 27 March 2001 (2001-03-27) | 1-10 |
| A | JP 2011-181679 A (TDK CORPORATION) 15 September 2011 (2011-09-15) | 1-10 |
| A | JP 2007-169417 A (KURODA DENKI KK) 05 July 2007 (2007-07-05) | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/007497**

| Patent document cited in search report | Publication date (day/month/year) | Patent family member(s) | Publication date (day/month/year) |
|---|---|---|---|
| JP 2022-016388 A | 21 January 2022 | US 2023/0290550 A1<br>claims, paragraphs [0017], [0020], [0066], [0131]-[0132], examples 24, 32<br>EP 4180485 A1<br>CN 115943468 A<br>KR 10-2023-0037548 A<br>TW 202203264 A<br>WO 2022/009956 A1 | |
| WO 2007/013436 A1 | 01 February 2007 | TW 200731299 A | |
| JP 2001-081327 A | 27 March 2001 | (Family: none) | |
| JP 2011-181679 A | 15 September 2011 | (Family: none) | |
| JP 2007-169417 A | 05 July 2007 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021246442 A
- JP 2012151205 A
- JP 2023035389 A